# EUROPÄISCHE PATENTSCHRIFT

(11) **EP 2 829 666 B1**
(45) Veröffentlichungstag und Bekanntmachung des Hinweises auf die Patenterteilung: **13.04.2016**
(21) Anmeldenummer: 13177821.9
(22) Anmeldetag: 24.07.2013
(51) Int. Cl.: F16K 47/02, F16K 31/34, E03D 9/14, E03D 1/32

(54) **Einlaufgarnitur für einen Spülkasten**
Inlet fitting for a cistern
Garniture d'entrée pour une chasse d'eau

(43) Veröffentlichungstag der Anmeldung: 28.01.2015
(73) Patentinhaber: Geberit International AG, 8645 Jona (CH)
(72) Erfinder: Rüdisser, Martin, 8645 Jona (CH); Wey, Paul, 8733 Eschenbach (CH); Weiss, Rolf, 8632 Tann (CH)
(74) Vertreter: Frischknecht, Harry Ralph

(56) Entgegenhaltungen:
- WO-A1-00/15991
- WO-A1-2012/062189
- DE-A1- 1 609 275
- FR-A1- 2 724 958

## Beschreibung

### TECHNISCHES GEBIET

Die vorliegende Erfindung betrifft eine Einlaufgarnitur für einen Spülkasten nach dem Oberbegriff von Anspruch 1.

### STAND DER TECHNIK

Einlaufgarnituren dienen der Befüllung von Spülkästen von Sanitärartikeln, wie Toiletten oder Urinalen. Beispielsweise ist aus der EP 1 175 576 eine Einlaufgarnitur für einen Spülkasten bekannt geworden. Mit dieser Einlaufgarnitur wurden gute Ergebnisse bezüglich der Vermeidung von Fehlfunktionen erreicht. Auch bezüglich der Geräuschbildung sind die nach der EP 1 175 576 hergestellten Einlaufgarnituren vorteilhaft. Auch ist aus der WO 00/15991 eine Ablaufvorrichtung bekannt geworden, welche aber bezüglich der Geräuschbildung nachteilig ausgebildet ist.

Es ist aber ein Bedürfnis, Einlaufgarnituren anzugeben, deren Geräuschbildung weiter reduziert wird, so dass der Benutzer die Befüllung nicht akustisch wahrnehmen kann.

### DARSTELLUNG DER ERFINDUNG

Der Erfindung liegt eine Aufgabe zugrunde, eine Einlaufgarnitur anzugeben, welche beim Durchfluss von Spülwasser möglichst geräuscharm ist.

Diese Aufgabe löst der Gegenstand von Anspruch 1. Demgemäss umfasst eine Einlaufgarnitur für die Befüllung eines Spülkastens ein Gehäuse, ein im Gehäuse angeordneten Wasserführungskanal mit einem Eingang und einem Ausgang, und ein im Wasserführungskanal angeordnetes schwimmergesteuertes Ventil, welches den Wasserführungskanal sperrt bzw. bei der Befüllung frei gibt. Weiter ist im Wasserführungskanal in Fliessrichtung gesehen nach dem Ventil ein Expansionselement angeordnet, welches den Querschnitt des Wasserführungskanals vergössert, so dass eine Expansion des Wasserstrahls stattfindet und die Fliessgeschwindigkeit reduziert wird.

Durch die Expansion des Wasserstrahls wird eine Verringerung der Fliessgeschwindigkeit erreicht, wodurch die Geräuschbildung in der Einlaufgarnitur ebenfalls verkleinert wird. Bei der Expansion des Wasserstrahls wird insbesondere dessen Hüllkurve, welche den Wasserstrahl umhüllt, verändert.

Besonders bevorzugt ist das Expansionselement in Strömungsrichtung vor einem Auslassrohr, welches den Ausgang bildet, angeordnet. Durch diese Anordnung kann erreicht werden, dass der Wasserstrahl vor dem Ausgang verbreitert wird und dann durch das Auslassrohr geführt werden kann, wobei innerhalb des Auslassrohr es zu einer weiteren Strömungsberuhigung kommen kann. Durch das Auslassrohr ist das Spülwasser in einen Spülkasten abgebbar.

In einer Weiterbildung der Erfindung umfasst das Expansionselement ein Rohrelement mit einem Rohrende und ein Umlenkungselement mit einer Umlenkungsfläche. Das Rohrelement ist mit seinem Rohrende auf die Umlenkungsfläche gerichtet, wobei das Rohrende beabstandet zur Umlenkungsfläche steht. Durch diesen Abstand trifft der Wasserstrahl als freier Wasserstrahl auf die Umlenkungsfläche auf und wird dort umgelenkt.

Vorzugsweise sind das Rohrelement und die Umlenkungsfläche Teil des Wasserführungskanals bzw. begrenzen den Wasserführungskanal im entsprechenden Bereich.

Die Umlenkungsfläche ist als gekrümmte Fläche ausgebildet. Das Rohrelement kann also auf eine gekrümmte oder eine ebene Fläche gerichtet sein, wobei das Rohrende in einem Abstand zur besagten Fläche liegt.

Das Rohrelement kann in verschiedenen Richtungen auf die Umlenkungsfläche gerichtet sein. Besonders bevorzugt ist das Rohrelement mit der Mittelachse des Rohrs aber rechtwinklig auf die Fläche gerichtet.

Nach der Erfindung erstreckt sich die Umlenkungsfläche von einem Schnittpunkt der Mittelachse des Rohrelementes gerundet zum Rohrelement hin. Das Rohrelement ist mit seinem Rohrende auf diesen Schnittpunkt gerichtet. Die Umlenkungsfläche bildet also eine Art Schirm bzw. weist im Querschnitt gesehen die Form einer Parabel auf, wobei der Wasserstrahl von Rohrende her kommend auf den Scheitelpunkt auftrifft.

In einer Weiterbildung der Erfindung kann die Umlenkungsfläche auch kegelförmig ausgebildet sein, wobei die Spitze des Kegels in das Zentrum des Rohrendes gerichtet ist und sich von dort kegelförmig vom Rohrende weg erstreckt. Die Mantelfläche des Kegels kann mindestens bereichsweise, insbesondere gegenüber der Spitze gerundet ausgebildet sein. Die Rundung kann dabei die Fläche, welche durch die Parabel bereitgestellt wird, übergehen. Mit anderen Worten gesagt, kann die Umlenkungsfläche in der Querschnittsform der Parabel im Scheitelpunkt einen Kegel aufweisen, dessen Spitze gegen das Rohrende gerichtet ist. Der Übergang zwischen Kegelfläche und Parabelfläche ist vorzugsweise gerundet.

Erfindungsgemäß definiert die Umlenkungsfläche einen Innenraum, in welchen das Rohrelement einragt, wobei zwischen der Aussenseite des Rohrelements und der Umlenkungsfläche ein ringförmiger Spalt vorhanden ist.

Vorzugsweise ist der Querschnitt des besagten Spaltes grösser als der Querschnitt des Rohrelements. Besonders bevorzugt ist der Querschnitt des Spaltes auf den Leitungsdruck einstellbar oder selbstregulierend.

Gegenüber dem Rohrende weist das Rohrelement ein Rohranfang auf, welcher vorzugsweise einen Teil des schwimmergesteuerten Ventils darstellt. Ein Ventilstössel des Schwimmergesteuerten Ventil ragt dabei in den Rohranfang ein bildet mit dem Rohranfang eine entsprechende Dichtstelle.

Zwischen dem Rohranfang und dem Rohrende weist das Rohrelement in einer besonders bevorzugten Ausführungsform einen Rohrbogen auf, welcher vorzugsweise um 90° gebogen ist. Vorzugsweise verläuft das Rohrelement in Einbaulage gesehen mindestens teilweise unterhalb des Umlekungselementes. Besonders bevorzugt ragt das Rohrelement seitlich in ein Auslassrohr, welches ebenfalls einen Teil der Ablaufgranitur bzw. des Gehäuses darstellt.

Vorzugsweise umfasst der Wasserführungskanal ein Auslassrohr, welches in Einbaulage Vertikal verläuft, wobei die Umlenkungsfläche das Wasser in das Auslassrohr umlenkt und wobei durch das Auslassrohr das Spülwasser in einen Spülkasten abgebbar ist.

Besonders bevorzugt verläuft die Mittelachse des Auslassrohrs abschnittsweise kollinear oder parallel zur Mittelachse des Rohrelements. Vorzugsweise verläuft die Umlenkungsfläche im Bereich des Übergangs in das oder in Richtung des Auslassrohrs fluchtend zum Auslassrohr.

In einer besonders bevorzugten Ausführung schliesst das Umlenkungselement das Auslassrohr in der Vertikalen gegen oben hin ab. Besonders bevorzugt weist das Umlenkungselement die Gestalt eines Deckels auf.

Vorzuweise weisen das Umlenkungselement und/oder das Auslassrohr, insbesondere im Bereich des Übergangs zwischen Umlenkungselement und Auslassrohr, mindestens einen Luftdurchgang auf. Durch diesen Luftdurchgang kann im Falle eines Unterdruckes im Wasserführungsführungskanal über diesen Luftkanal Luft aus dem Spülkasten angesogen werden.

Besonders bevorzugt liegt der Entlüftungsdurchgang hinter einer Abdeckung, wobei die Abdeckung beabstandet zum Entlüftungsdurchgang liegt und diesen bezüglich des überfliessenden Wassers überdeckt. Alternativ weist der Entlüftungsdurchgang in Fliessrichtung die Form eines schmalen Schlitzes auf, dessen kürzere lichte Weite vom Spülwasser überflossen wird.

Besonders bevorzugt umfasst die Umlenkungsfläche mindestens einen Strömungsteiler, insbesondere in der Gestalt eines sich von der Umlenkungsfläche erstreckenden Kegels.

In einer Weiterbildung ist das Expansionselement ein Diffusor.

In einer Weiterbildung umfasst das Expansionselement einen Diffusor, welcher in Strömungsrichtung gesehen vor dem Umlenkungselement angeordnet ist. Es handelt sich hierbei um eine zweistufige Expansion des Wasserstrahls.

Besonders bevorzugt umfasst der Wasserführungskanal vom Eingang her gesehen eine Düse mit einem Düsenkanal, wobei die Düse in Fliessrichtung gesehen vor dem schwimmergesteuerten Ventil und vor dem Expansionselement liegt.

Eine Spülkastenanordnung umfasst vorzugsweise eine Einlaufgarnitur nach obiger Beschreibung.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittansicht durch eine Einlaufgarnitur gemäss einer Ausführungsform;
- Fig. 2: eine perspektivische Ansicht der Schnittansicht nach Figur 1;
- Fig. 3: die Schnittansicht nach Figur 1 mit eingezeichneten Durchflusspfeilen;
- Fig. 4: die Schnittansicht nach Figur 1 mit eingezeichneten Durchflusspfeilen; und
- Fig. 5: eine Detailansicht einer ersten Variante eines Umlenkungselementes der Einlaufgarnitur nach Figur 1; und
- Fig. 6: eine Detailansicht einer zweiten Variante eines Umlenkungselementes der Einlaufgarnitur nach Figur 1.

### BESCHREIBUNG BEVORZUGTER AUSFÜHRUNGSFORMEN

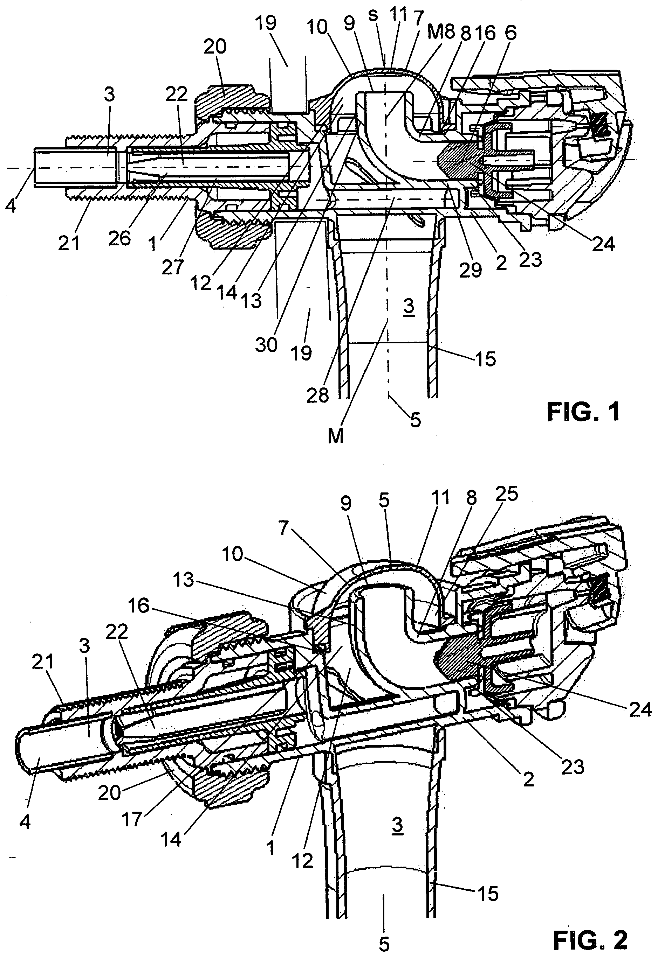

In der Figur 1 wird eine Ausführungsform einer erfindungsgemässen Einlaufgarnitur gezeigt.

Die in Figur 1 gezeigte Einlaufgarnitur 1 wird an einem Spülkasten 19 befestigt. Hierfür weist die Einlaufgarnitur eine Mutter 20 auf, mit welcher die Einlaufgarnitur gegen den Spülkasten 19 geklemmt werden kann. Die Einlaufgarnitur 1 dient der Befüllung des Spülkastens 19 mit Spülwasser. Das Spülwasser aus dem Spülkasten kann dann einer Sanitärarmatur, wie beispielsweise einem Urinal oder einer Toilette zwecks Spülung derselben zugeführt werden.

Die Einlaufgarnitur 1 umfasst ein Gehäuse 2, einen im Gehäuse 2 angeordneten Wasserführungskanal 3 mit einem Eingang 4 und einem Ausgang 5. Über den Eingang 4 ist die Einlaufgarnitur 1 an einer Wasserleitung angeschlossen. Der Ausgang 5 ragt in den Spülkasten hinein. Weiter ist im Wasserführungskanal 3 ein schwimmergesteuertes Ventil 6 angeordnet, welches den Wasserführungskanal 3 sperrt bzw. bei der Befüllung frei gibt. Das schwimmergesteuerte Ventil 6 umfasst einen hier nicht dargestellten Schwimmer, welcher den Zustand des schwimmergesteuerten Ventils 6 anhand des Wasserstandes im Spülkasten 19 steuert. Bei abgesenktem Wasserstand ist das schwimmergesteuerte Ventil 6 offen und bei vollem Spülkasten ist das schwimmergesteuerte Ventil 6 geschlossen.

Der Eingang 4 umfasst hier einen Gewindeabschnitt 21, über welchen die Einlaufgarnitur 1 mit einer Wasserleitung verbunden werden kann. Weiter ist im Bereich des Eingangs ein Düsenkörper 22 angeordnet. Das Wasser fliesst vom Eingang 4 her gesehen über den Eingang 4 zum Düsenkörper 22 und wird dann dem schwimmergesteuerten Ventil 6 zugeleitet.

Weiter umfasst die Einlaufgarnitur 1 ein im Wasserkanal 3 in Fliessrichtung gesehen nach dem schwimmergesteuerten Ventil 6 angeordnetes Expansionselement 7. Das Expansionselement 7 vergrössert den Querschnitt des Wasserführungskanals 3, sodass eine Expansion des Wasserstrahls stattfindet und die Fliessgeschwindigkeit des Wasserstrahls reduziert wird. Durch diese Expansion gemeinsam mit der einhergehenden Reduktion der Fliessgeschwindigkeit kann die Geräuschbildung bei der Befüllung des Spülkastens reduziert werden.

Das Expansionselement 7 kann verschiedene Ausführungsformen aufweisen. Vorteilhafte Ausführungsformen des Expansionselementes 7 sind aber derart ausgebildet, dass der Wasserstrahl im Wasserführungskanal 3 kontrolliert expandieren kann. Das heisst, dass es vorteilhaft ist, wenn der Wasserstrahl bei seiner Vergrösserung kontrolliert vergrössert wird, beispielsweise durch eine entsprechende Führung der Seitenwände des Wasserführungskanals 3. Abschnittsweise kann diese Führung aber auch unterbrochen sein, wobei es dann aber Vorteilhaft ist, dass dieser freie Wasserstrahl auf ein strömungstechnisches Element auftrifft, welches den Wasserstrahl wieder führt.

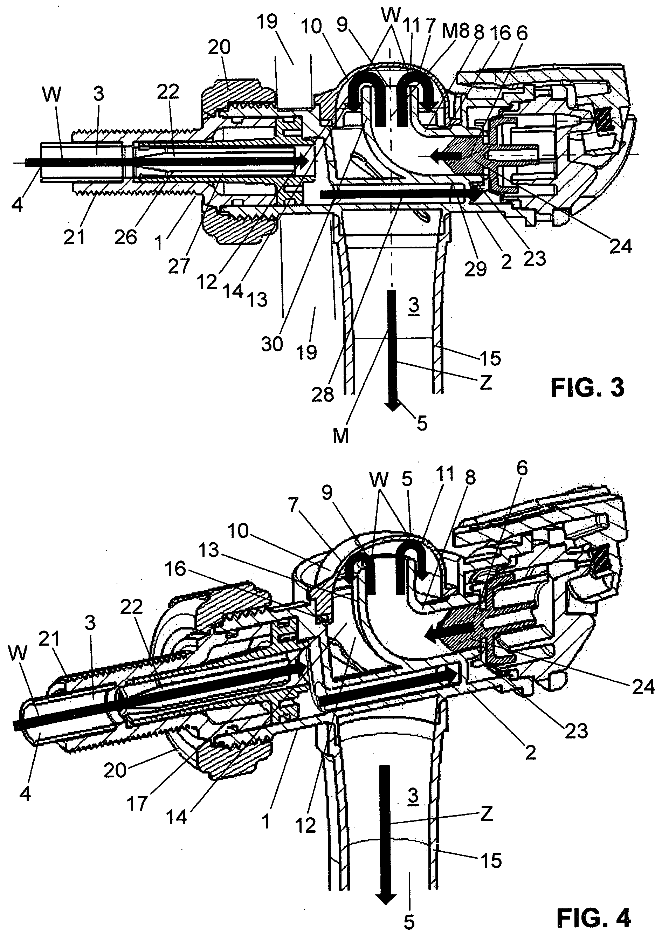

In den Figuren 1 bis 4 wird ein Expansionselement 7 gemäss einer ersten bevorzugten Ausführungsform gezeigt. Gemäss dieser ersten Ausführungsform umfasst das Expansionselement 7 ein Rohrelement 8 mit einem Rohrende 9 und ein Umlenkungselement 10 mit einer Umlenkungsfläche 11. Das Rohrelement 8 ist mit seinem Rohrende 9 auf die Umlenkungsfläche 11 gerichtet. Das Rohrende 9 steht beabstandet zur Umlenkungsfläche 11. Ein Wasserstrahl verlässt bei geöffnetem Ventil 6 das Rohrelement 8 im Bereich seines Rohrendes 9 und trifft dann auf die Umlenkungsfläche 11. Dies wird in den Figuren 3 und 4 durch die Pfeile mit dem Bezugszeichen W entsprechend gezeigt.

Beim Verlassen des Rohrelementes 8 über das Rohrende 9 platzt der Wasserstrahl W aufgrund des Wegfalls seines Führungselementes, nämlich dem Rohrelement 8, auf und wird durch die Umlenkungsfläche 11 entsprechend umgelenkt. Ja nach Ausbildung der Umlenkungsfläche kann eine sehr grosse Expansion des Wasserstrahls erreicht werden, wodurch die Fliessgeschwindigkeit massiv reduziert wird.

Gegenüber dem Rohrende 9 weist das Rohrelement 8 einen Rohranfang 23 auf. Der Rohranfang 23 dient hier als Ventilsitz für das schwimmergesteuerte Ventil 6. Ein Ventilkörper 24 des Ventils 6 ragt in den Rohranfang 23 hinein. Die Dichtstelle zwischen Rohranfang 23 und Ventilkörper 24 stellt das Abschlussorgan im Wasserführungskanal 2 für die Zuführung des Spülwassers dar. Die Bewegung des Ventilkörpers 24 wird durch einen Schwimmer, der in den Figuren nicht gezeigt ist, bereitgestellt.

Das Rohrelement 8 und auch die Umlenkungsfläche 11 sind Teil des Wasserführungskanals 3. Mit anderen Worten gesagt begrenzen diese Elemente den Wasserführungskanal 3 gegen aussen hin.

Die Umlenkungsfläche 11 ist in der Ausführungsform gemäss den Figuren als konkav gekrümmte Fläche dargestellt. In anderen Ausführungsformen kann die Umlenkungsfläche 11 auch als ebene Fläche oder als konvexe Fläche ausgebildet sein. Auch wäre es denkbar, dass die Umlenkungsfläche 11 die Form eines gegen das Rohrende 9 gerichteten Kegels aufweist.

Die Umlenkungsfläche 11 gemäss der in den Figuren gezeigten Ausführungsform hat hier die Form eines Schirms. Die Umlenkungsfläche 11 erstreckt sich von einem Schnittpunkt S der Mittelachse M8 des Rohrelementes 8 mit der Umlenkungsfläche 11 gerundet zum Rohrelement 8 hin. Die Mittelachse M8 definiert die Rohrachse im Bereich des Rohrendes. Das Rohrelement 8 ist mit seinem Rohrende 9 auf diesen Schnittpunkt S gerichtet. Der Krümmungsradius der Rundung kann konstant oder variabel sein. Im vorliegenden Ausführungsbeispiel ist der Radius der Umlenkungsfläche 11 im Wesentlichen konstant und geht dann in eine zylindrische Form über. Die zylindrische Form bzw. der zylindrische Abschnitt, welcher durch die zylindrische Form gebildet wird trägt das Bezugszeichen 25.

Zwischen dem Rohrende 9 und dem Zentrum der gerundeten Umlenkungsfläche 11 ist der Wasserstrahl frei. Die Distanz zwischen Rohrende 9 und dem Auftrittspunkt auf der Umlenkungsfläche 11 ist vorzugsweise so gewählt, dass diese möglichst klein ist. In bevorzugten Ausführungsformen beträgt die Distanz wenige Millimeter. Das heisst, dass der Wasserstrahl nur über eine vergleichsweise kurze Distanz nicht geführt ist. Das besagte Zentrum der gerundeten Umlenkungsfläche entspricht im Wesentlichen einem Scheitelpunkt, von welchem sich die Umlenkungsfläche erstreckt.

Die Umlenkungsfläche 11 definiert einen Innenraum 12, in welchen das Rohrenede 9 hineinragt. Mit anderen Worten gesagt ragt das Rohr 8 mit seinem Rohrende 9 in das Umlenkungselement 10 hinein.

Das Rohr 8 ist hier zwischen Rohranfang 23 und Rohrende 9 mit einem 90° Bogen versehen. Das Rohr 8 verläuft über einen ersten Rohrabschnitt 29 nach dem Rohranfang 23 unterhalb der Umlenkungsfläche 11 bis auf die Höhe des Zentrums derselben. Anschliessend nach dem 90° Bogen verläuft das Rohr 9 mit einem zweiten Rohrabschnitt 30 in Richtung Umlenkungsfläche 11, hier in das Umlenkungselement 11 hinein. Der erste Rohrabschnitt 29 wird durch das Wasser nach erfolgter Umlenkung überströmt. Der zweite Rohrabschnitt 30 verläuft hier entlang der Mittelachse M8.

Zwischen der Aussenseite 13 des Rohrelementes 8 und der Umlenkungsfläche 9 entsteht ein ringförmiger Spalt 14. Dieser ringförmige Spalt 14 wird durch das Spülwasser durchströmt. Der Querschnitt des besagten ringförmigen Spaltes 14 ist vorzugsweise grösser als der Querschnitt des Rohrelementes 8.

Wie in den Figuren 1 bis 4 gezeigt umfasst das Einlaufgehäuse 1 vorzugsweise weiter ein Auslassrohr 15, welches sich dem Expansionselement 7 anschliesst. Das Auslassrohr 15 begrenzt dabei den Wasserführungskanal 3 weiter. Das Auslassrohr 15 endet mit dem Ausgang 5. In Einbaulage steht das Auslassrohr 15 vorzugsweise vertikal. In der vorliegenden Ausführungsform wird das Wasser im Wasserführungskanal 3 durch die Umlenkungsfläche 11 in das Auslassrohr 15 umgelenkt. Das Spülwasser durchfliesst nach erfolgter Expansion des Wasserstrahls durch das Auslassrohr 15 und gelangt schliesslich in den Spülkasten. Dies wird in den Figuren 3 und 4 durch den Pfeil Z gezeigt.

Die Mittelachse M des Auslassrohrs verläuft kollinear oder parallel zur Mittelachse M8 des Rohrelementes 8. Die Fliessrichtung des Wassers wird durch das Umlenkungselement 10 mit der Umlenkungsfläche 11 entsprechend geändert, so dass das Wasser im Bereich des Rohrelementes 8 in Einbaulage gesehen nach oben fliesst und dann durch das Umlenkungselement 10 umgelenkt wird, wobei das Wasser im Auslassrohr 15 dann nach unten fliesst.

Die Umlenkungsfläche 11 verläuft im Bereich des Übergangs 16 zwischen Umlenkungsfläche 11 und Auslassrohr 15 vorzugsweise passend zum Durchmesser des Auslassrohrs 15. Mit anderen Worten gesagt ist ein strömungstechnisch guter Übergang zwischen der Umlenkungsfläche 11 und dem Auslassrohr gewährleistet.

Das Rohrelement 8 mit dem ersten Rohrabschnitt 29 ragt seitlich in das Auslassrohr 15 hinein und erstreckt sich dann nach dem 90°-Bogen nach oben. Mit dem zweiten Rohrabschnitt 30 verläuft das Rohrelement 8 dann parallel zum Auslassrohr 15.

Das Umlenkungselement 10 schliesst in der vorliegenden Ausführungsform das Auslassrohr 15 in der Vertikalen gesehen gegen oben hin ab. Das Umlenkungselement 10 bildet also ein Verschlusselement für das Auslassrohr 15 gegenüber des Ausgangs 5.

Besonders bevorzugt weist die Einlaufgarnitur 1 einen Luftdurchgang 17 auf. Über diesen Luftdurchgang 17 kann bei einem Unterdruck in der Leitung, die am Eingang 4 angeschlossen ist, Luft aus dem Spülkasten angesogen werden, sodass verhindert wird, dass Spülwasser aus dem Spülkasten angesogen wird. Dieser Luftdurchgang 17 kann verschiedenartig ausgebildet sein.

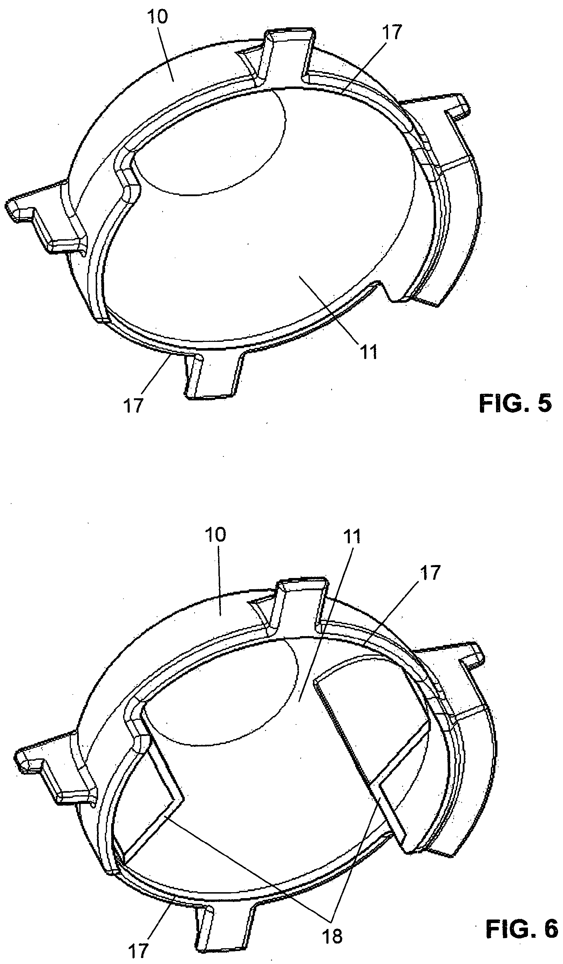

In der vorliegenden Ausführungsform ist der Luftdurchgang 17 im Bereich des Übergangs 16 zwischen Umlenkungselement 10 und Auslassrohr 15 angeordnet. In den Figuren 5 und 6 wird der Luftdurchgang 17 als Teil des Umlenkungselementes 10 dargestellt. Es handelt sich dabei um eine im Umlenkungselement 10 angeordnete Ausnehmung, welche dann, wenn das Umlenkungselement 10 mit der Einlaufgarnitur in Verbindung steht, einen Schlitz bereitstellt.

In einer anderen Variante liegt der Luftdurchgang 17 hinter einer Abdeckung, wobei die Abdeckung beanstandet zum Luftdurchgang 17 liegt und diesen bezüglich des überfliessenden Wassers überdeckt. Somit kann bei der Befüllung des Spülkastens kein Wasser durch den Luftdurchgang 17 hindurchtreten. Der Luftdurchgang 17 kann aber auch die Form eines schmalen Schlitzes aufweisen, dessen kürzere lichte Weite vom Spülwasser überflossen wird.

In den Figuren 5 und 6 wird das Umlenkungselement 10 als separates Teil dargestellt. Das Umlenkungselement 10 kann aber auch einstückig am Gehäuse 2 angeformt sein.

In der Figur 6 wird gezeigt, dass die Umlenkungsfläche 11 in einer besonders bevorzugten Ausführung einen Strömungsteiler bzw. mindestens einen Strömungsteiler 18 aufweist.

Die Strömungsteiler 18 erstrecken sich von der Umlenkungsfläche 11 weg. Einerseits dienen diese beiden Strömungsteiler 18 der weiteren Expansion des Wasserstrahls. Andererseits wird der Wasserstrahl in die gewünschte Richtung geteilt. Vorzugsweise liegen die in der Figur 6 gezeigten Strömungsteiler in Einbaulage über den Rohrabschnitt 29, welcher seitlich in das Auslassrohr 15 hineinragt.

In einer weiteren, hier nicht dargestellten Ausführungsform wäre es zudem denkbar, dass es sich von der Umlenkungsfläche 11 ein Strömungsteiler 18 in der Form eines Kegels in Richtung des Rohrelementes 8 erstreckt.

In einer zweiten, hier nicht gezeigten Ausführungsform, ist das Expansionselement 7 ein Diffusor. Über diesen Diffusor wird dabei ebenfalls eine Durchmesservergrösserung erreicht, sodass die Fliessgeschwindigkeit des Wassers entsprechend abnimmt. Alle anderen Elemente der Einlaufgarnitur 1 können gemäss der ersten Ausführungsform ausgebildet sein.

In einer dritten Ausführungsform, welche ebenfalls nicht in den Figuren gezeigt ist, umfasst das Expansionselement 7 einen Diffusor und dass Umlenkungselement 10 gemäss der oben beschriebenen ersten Ausführungsform. Der Diffusor ist dabei vorzugsweise in Strömungsrichtung gesehen vor dem Umlenkungselement 10 angeordnet. Hierdurch kann eine besonders leise Wasserführung erreicht werden.

Wie oben bereits erwähnt umfasst die Einlaufgarnitur 1 gemäss aller Ausführungsform vorzugsweise einen Düsenkörper 22. Der Düsenkörper 22 ist dabei Teil einer Düse 26, die einen Düsenkanal 16 umfasst. Der Düsenkanal 16 wird dabei durch den Düsenkörper 22 beeinflusst. In Fliessrichtung gesehen ist die Düse 26 vor dem schwimmergesteuerten Ventil und vor den Expansionselement 7 angeordnet.

Unter Bezugnahme auf die Figuren 3 und 4 wird nun nochmals der Wasserfluss in der Einlaufgarnitur 1 erläutert. Das Wasser tritt über den Eingang 4 in die Einlaufgarnitur 1 ein und wird vom Wasserführungskanal 3 entsprechend geführt. In einem ersten Abschnitt fliesst das Wasser im Wasserführungskanal 3 die Düse 26. Dabei tritt das Wasser durch den Düsenkanal 27 hindurch. Das Wasser verlässt dann den Düsenkanal 27 und wird in einem Zwischenkanal 28 um das Auslassrohr 15 herum bzw. durch das Auslassrohr 15 hindurch zum schwimmergesteuerten Ventil 6. Nach Passieren des schwimmergesteuerten Ventils 6 wird das Wasser zum Rohrelement 8 geführt wobei es dieses durch das Rohrende 9 in Richtung Umlenkungselement 10 bzw. Expansionselement 7 wieder verlässt und schliesslich zum Auslassrohr 15 gelangt.

### BEZUGSZEICHENLISTE

| | | | |
|---|---|---|---|
| 1 | Einlaufgarnitur | 29 | erster Rohrabschnitt |
| 2 | Gehäuse | 30 | zweiter Rohrabschnitt |
| 3 | Wasserführungskanal | S | Schnittpunkt |
| 4 | Eingang | M | Mittelachse |
| 5 | Ausgang | M8 | Mittelachse |
| 6 | schwimmergesteuertes Ventil | | |
| 7 | Expansionselement | | |
| 8 | Rohrelement | | |
| 9 | Rohrende | | |
| 10 | Umlenkungselement | | |
| 11 | Umlenkungsfläche | | |
| 12 | Innenraum | | |
| 13 | Aussenseite | | |
| 14 | Spalt | | |
| 15 | Auslassrohr | | |
| 16 | Übergang | | |
| 17 | Luftdurchgang | | |
| 18 | Strömungsteiler | | |
| 19 | Spülkasten | | |
| 20 | Mutter | | |
| 21 | Gewindeabschnitt | | |
| 22 | Düsenkörper | | |
| 23 | Rohranfang | | |
| 24 | Ventilkörper | | |
| 25 | zylindrische Form | | |
| 26 | Düse | | |
| 27 | Düsenkanal | | |
| 28 | Zwischenkanal | | |

## Patentansprüche

1. Einlaufgarnitur (1) für die Befüllung eines Spülkastens umfassend ein Gehäuse (2),
ein im Gehäuse (2) angeordneten Wasserführungskanal (3) mit einem Eingang (4) und einem Ausgang (5),
ein im Wasserführungskanal (3) angeordnetes schwimmergesteuertes Ventil (6), welches den Wasserführungskanal (3) sperrt bzw. bei der Befüllung frei gibt,
wobei im Wasserführungskanal (3) in Fliessrichtung gesehen nach dem Ventil (6) ein Expansionselement (7) angeordnet ist, welches den Querschnitt des Wasserführungskanals (3) vergrössert, so dass eine Expansion des Wasserstrahls stattfindet und die Fliessgeschwindigkeit reduziert wird,
wobei das Expansionselement (7) ein Rohrelement (8) mit einem Rohrende (9) und ein Umlenkungselement (10) mit einer Umlenkungsfläche (11) umfasst, wobei das Rohrelement (8) mit seinem Rohrende (9) auf die Umlenkungsfläche (11) gerichtet ist und wobei das Rohrende (9) beabstandet zur Umlenkungsfläche (11) angeordnet ist, **dadurch gekennzeichnet,**
**dass** die Umlenkungsfläche (11) als gekrümmte Fläche ausgebildet ist,
**dass** sich die Umlenkungsfläche (11) von einem Schnittpunkt (S) der Mittelachse (M) des Rohrelementes (8) gerundet zum Rohrelement (8) hin erstreckt, und wobei das Rohrelement (8) mit seinem Rohrende (9) auf diesen Schnittpunkt (S) bzw. auf die Umlenkungsfläche (11) gerichtet ist,
**dass** die Umlenkungsfläche (11) einen Innenraum (12) definiert, in welchen das Rohrelement (8) einragt, und
**dass** zwischen der Aussenseite (13) des Rohrelements (8) und der Umlenkungsfläche (11) ein ringförmiger Spalt (14) vorhanden ist.

2. Einlaufgarnitur nach Anspruch 1, **dadurch gekennzeichnet, dass** das Rohrelement (8) und die Umlenkungsfläche (11) Teil des Wasserführungskanals (3) sind.

3. Einlaufgarnitur nach einem der vorhergehenden Ansprüche, **dadurch gekennzeichnet, dass** der Querschnitt des besagten Spaltes (14) grösser ist als der Querschnitt des Rohrelements (8).

4. Einlaufgarnitur nach einem der vorhergehenden Ansprüche, **dadurch gekennzeichnet, dass** der Wasserführungskanal (3) ein Auslassrohr (15) umfasst, welches in Einbaulage Vertikal verläuft, wobei die Umlenkungsfläche (11) das Wasser in das oder in Richtung des Auslassrohr (15) umlenkt und wobei durch das Auslassrohr (15) das Spülwasser in einen Spülkasten abgebbar ist.

5. Einlaufgarnitur nach Anspruch 4, **dadurch gekennzeichnet, dass** die Mittelachse des Auslassrohrs (15) abschnittsweise kollinear oder parallel zur Mittelachse des Rohrelements (8) verläuft
und/oder dass die Umlenkungsfläche (11) im Bereich des Übergangs (16) in das Auslassrohr (15) fluchtend zum Auslassrohr (15) verläuft
und/oder dass sich das Auslassrohr (15) in Fliessrichtung des Spülwassers gesehen dem Umlenkungselement (10) anschliesst, vorzugsweise unmittelbar anschliesst,
und/oder dass das Umlenkungselement (10) Teil des Auslassrohrs (15) ist.

6. Einlaufgarnitur nach einem der Ansprüche 4 bis 5, **dadurch gekennzeichnet, dass** das Umlenkungselement (10) das Auslassrohr (15) in der Vertikalen gegen oben hin abschliesst.

7. Einlaufgarnitur nach einem der vorhergehenden Ansprüche, **dadurch gekennzeichnet, dass** das Umlenkungselement (10) und/oder das Auslassrohr (15), insbesondere im Bereich des Übergangs (16) zwischen Umlenkungselement (10) und Auslassrohr (15), mindestens ein Luftdurchgang (17) aufweisen.

8. Einlaufgarnitur nach Anspruch 7, **dadurch gekennzeichnet, dass** der Luftdurchgang (17) hinter einer Abdeckung liegt, wobei die Abdeckung beabstandet zum Luftdurchgang (17) liegt und diesen bezüglich des überfliessenden Wassers überdeckt oder dass der Luftdurchgang (17) in Fliessrichtung die Form eines schmalen Schlitzes aufweist, dessen kürzere lichte Weite vom Spülwasser überflossen wird.

9. Einlaufgarnitur nach einem der vorhergehenden Ansprüche, **dadurch gekennzeichnet, dass** die Umlenkungsfläche (11) mindestens einen Strömungsteiler (18), insbesondere in der Gestalt eines sich von der Umlenkungsfläche (11) erstreckenden Kegels oder Keils, umfasst.

10. Einlaufgarnitur nach einem der vorhergehenden Ansprüche, **dadurch gekennzeichnet, dass** das Expansionselement ein Diffusor ist.

11. Einlaufgarnitur nach einem der vorhergehenden Ansprüche, **dadurch gekennzeichnet, dass** das Expansionselement einen Diffusor umfasst, welcher in Strömungsrichtung gesehen vor dem Umlenkungselement (10) angeordnet ist.

12. Einlaufgarnitur nach einem der vorhergehenden Ansprüche, **dadurch gekennzeichnet, dass** der Wasserführungskanal (3) vom Eingang her gesehen eine Düse (15) mit einem Düsenkanal (16) umfasst, wobei die Düse in Fliessrichtung gesehen vor dem schwimmergesteuerten Ventil und vor dem Expansionselement liegt.

## Claims

1. An inlet fitting (1) for the filling of a cistern comprising
a housing (2),
a water guiding channel (3) that is arranged in the housing with an inlet (4) and an outlet (5),
a float-controlled valve (6) that is arranged in the water guiding channel (3), which blocks the water guiding channel (3) or opens the water guiding channel (3) during the filling respectively,
wherein an expansion element (7) is arranged in the water guiding channel (3) after valve (6) in the flow direction, wherein the expansion element (7) increases the cross-section of the water guiding channel (3), so that an expansion of the waterjet occurs and the flow velocity is reduced,
wherein the expansion element (7) comprises a pipe element (8) with a pipe end (9) and a deflection element (10) with a deflection face (11), wherein the pipe element (8) is directed on the deflection face (11) with its pipe end (9) and wherein the pipe end (9) is arranged apart from the deflection face (11), **characterized in that** the deflection face (11) is designed as curved surface,
**in that** the deflection face (11) extends rounded from an intersection (S) of the central axis (M) of the pipe element (8) to the pipe element (8), and wherein the pipe element (8), with its pipe end (9), is directed on said intersection (S) or on the deflection face (11) respectively,
**in that** the deflection surface (11) defines an inner space (12), in which the pipe element (8) protrudes, and
**in that** an annular gap (14) is present between the outside (13) of the pipe element (8) and the deflection face (11).

2. The inlet fitting according to claim 1, **characterized in that** the pipe element (8) and the deflection face (11) are part of the water guiding channel (3).

3. The inlet fitting according to one of the previous claims, **characterized in that** the cross-section of said gap (14) is larger than the cross-section of the pipe element (8).

4. The inlet fitting according to one of the previous claims, **characterized in that** the water guiding channel (3) comprises an outlet pipe (15), which runs vertically in its mounting position, wherein the deflection face (11) deflects the water in the outlet pipe (15) or in the direction of the outlet pipe (15) and wherein the flushing water can be discharged through the outlet pipe (15) in a cistern.

5. The inlet fitting according to claim 4, **characterized in that** the central axis of the outlet pipe (15), in sections, runs collinear or parallel to the central axis of the pipe element (8)
and/or **in that** the deflection face (11) runs flush to the outlet pipe (15) in the region of the transition (16) in the outlet pipe (15)
and/or **in that** the outlet pipe (15) adjoins, preferably immediately, the deflection element (10) in the flow direction of the flushing water,
and/or **in that** the deflection element (10) is part of the outlet pipe (15).

6. The inlet fitting according to one of claims 4 or 5, **characterized in that** the deflection element (10) closes the outlet pipe (15) in the vertical in the upward direction.

7. The inlet fitting according to one of the previous claims, **characterized in that** the deflection element (10) and/or the outlet pipe (15) comprises at least one air passage (17), in particular in the region of the transition (16) between the deflection element (10) and the outlet pipe (15).

8. The inlet fitting according to claim 7, **characterized in that** the air passage (17) lies behind a cover, wherein the cover lies spaced apart to the air passage (17) and covers it with respect to the overflowing water or **in that** the air passage (17) has the form of a narrow slit in the flow direction, whose shorter clearance is flown over by the flushing water.

9. The inlet fitting according to one of the previous claims, **characterized in that** the deflection face (11) comprises at least one flow divider (18), in particular in the shape of a cone or a wedge that extends from the deflection face (11).

10. The inlet fitting according to one of the previous claims, **characterized in that** the expansion element is a diffusor.

11. The inlet fitting according to one of the previous claims, **characterized in that** the expansion element comprises a diffusor, which is arranged before the deflection element (10) in the flow direction.

12. The inlet fitting according to one of the previous claims, **characterized in that** the water guiding channel (3), viewed from the inlet, comprises a nozzle (15) with a nozzle channel (16), wherein the nozzle lies before the float-controlled valve and the expansion element in the flow direction.

## Revendications

1. Une garniture d'entrée (1) pour le remplissage d'une chasse d'eau comprenant un boîtier (2),
un canal de guidage d'eau (3) qui est disposé dans le boîtier avec une entrée (4) et une sortie (5),
une soupape à contrôle de flotteur (6) qui est disposé dans le canal de guidage d'eau (3), qui bloque le canal de guidage d'eau (3) ou qui libère le canal de guidage d'eau (3) pendant le remplissage respectivement,
où un élément d'expansion (7) est disposé dans le canal de guidage d'eau (3) après la soupape (6) dans la direction de l'écoulement, où l'élément d'expansion (7) augmente la section transversale du canal de guidage d'eau (3), de façon qu'une expansion du jet d'eau est produite et la vitesse d'écoulement est réduite,
où l'élément d'expansion (7) comprend un élément tubulaire (8) avec une extrémité de tube (9) et un élément de déviation (10) avec une face de déviation (11), où l'élément tubulaire (8) est dirigé vers la face de déviation (11) avec son extrémité de tube (9) et où l'extrémité de tube (9) est disposée à une distance de la face de déviation (11), **caractérisé**
**en ce que** la face de déviation (11) est réalisée comme une surface courbe,
**en ce que** la face de déviation (11) s'étend d'une manière arrondie d'une intersection (S) de l'axe central (M) de l'élément tubulaire (8) à l'élément tubulaire (8), et où l'élément tubulaire (8), avec son extrémité de tube (9), est dirigé sur ladite intersection (S) ou sur la face de déviation (11), respectivement,
**en ce que** la face de déviation (11) définit un espace intérieur (12), dans lequel l'élément tubulaire (8) fait saillie, et
**en ce que** un espace annulaire (14) est présent entre l'extérieure (13) de l'élément tubulaire (8) et la face de déviation (11).

2. La garniture d'entrée selon la revendication 1, **caractérisé en ce que** l'élément tubulaire (8) et la face de déviation (11) font partie du canal de guidage d'eau (3).

3. La garniture d'entrée selon l'une quelconque des revendications précédentes, **caractérisé en ce que** la section transversale dudit espace (14) est plus grande que la section transversale de l'élément tubulaire (8).

4. La garniture d'entrée selon l'une quelconque des revendications précédentes, **caractérisé en ce que** le du canal de guidage d'eau (3) comprend un tube de sortie (15), qui passe à la verticale dans sa position de montage, dans lequel la face de déviation (11) dévie l'eau dans le tube de sortie (15) ou dans la direction de le tube de sortie (15) et où l'eau de rinçage peut être évacué par le tube de sortie (15) dans une chasse d'eau.

5. La garniture d'entrée selon la revendication 4, **caractérisé en ce que** l'axe central du tube de sortie (15), dans des sections, passe colinéaire ou parallèle à l'axe central de l'élément tubulaire (8)
et/ou **en ce que** la face de déviation (11) passe alignée au tube de sortie (15) dans la région de la transition (16) dans le tube de sortie (15)
et/ou **en ce que** le tube de sortie (15) se raccorde, de préférence immédiatement, à l'élément de déviation (10) dans la direction de l'écoulement de l'eau de rinçage,
et/ou **en ce que** l'élément de déviation (10) fait partie du tube de sortie (15).

6. La garniture d'entrée selon l'une quelconque des revendications 4 ou 5, **caractérisé en ce que** l'élément de déviation (10) ferme le tube de sortie (15) dans la verticale dans la direction vers le haut.

7. La garniture d'entrée selon l'une quelconque des revendications précédentes, **caractérisé en ce que** l'élément de déviation (10) et/ou le tube de sortie (15) comprend au moins un passage de l'air (17), en particulier dans la région de la transition (16) entre l'élément de déviation (10) et le tube de sortie (15).

8. La garniture d'entrée selon la revendication 7, **caractérisé en ce que** le passage de l'air (17) se trouve derrière un couvercle, ou le couvercle se trouve à une distance au passage de l'air (17) et le recouvre par rapport à l'eau débordante ou **en ce que** le passage de l'air (17) a la forme d'une fente étroite dans la direction de l'écoulement, dont le jeu court est survolé par l'eau de rinçage.

9. La garniture d'entrée selon l'une quelconque des revendications précédentes, **caractérisé en ce que** la face de déviation (11) comprend au moins un diviseur de flux (18), en particulier en forme d'un cône ou d'un coin qui se prolonge à partir de la face de déviation (11).

10. La garniture d'entrée selon l'une quelconque des revendications précédentes, **caractérisé en ce que** l'élément d'expansion est un diffuseur.

11. La garniture d'entrée selon l'une quelconque des revendications précédentes, **caractérisé en ce que** l'élément d'expansion comprend un diffuseur, qui est disposé avant l'élément de déviation (10) dans la direction de l'écoulement.

12. La garniture d'entrée selon l'une quelconque des revendications précédentes, **caractérisé en ce que** le canal de guidage d'eau (3), vue de l'entrée, comprend une buse (15) avec un canal de buse (16), où la buse se trouve devant la soupape à contrôle de flotteur et l'élément d'expansion dans la direction de l'écoulement.
